Europäisches Patentamt

(19) European Patent Office

Office européen des brevets

(11) Publication number **0 018 418**
**A1**

## (12) EUROPEAN PATENT APPLICATION

published in accordance with Art 158(3) EPC

(21) Application number: 79900629.1

(22) Date of filing: 07.06.79

Data of the international application taken as a basis:

(86) International application number:
PCT/JP79/00144

(87) International publication number:
WO80/00037
International publication date:
10.01.80

(51) Int. Cl.³: **G 01 L 7/10**
**G 01 L 9/10, G 12 B 1/04**
**G 01 D 5/22**

(30) Priority: 09.06.78 JP 70213/78

(43) Date of publication of application:
12.11.80 Bulletin 80/23

(84) Designated Contracting States:
FR

(71) Applicant: MATSUSHITA ELECTRIC WORKS, LTD.
1048, Oaza-kadoma
Kadoma-shi Osaka 571(JP)

(72) Inventor: HAYASHI, Katsuji
Matsushita Electric Works Ltd.
1048 Oaza-Kadoma Kadoma-shi, Osaka 571(JP)

(72) Inventor: TERASHIMA, Otohiko
Matsushita Electric Works Ltd.
1048 Oaza-Kadoma Kadoma-shi, Osaka 571(JP)

(72) Inventor: ICHINOMIYA, Tsutonmu
Matsushita Electric Works Ltd.
1048 Oaza-Kadoma Kadoma-shi, Osaka 571(JP)

(74) Representative: Casalonga, Axel et al,
Bureau D.A.Casalonga Lilienstrasse 77
D-8000 München 80(DE)

(54) PRESSURE TRANSDUCER.

(57) The pressure transducer of this invention comprises a bellows made of two sheets of diaphragm plates which have concentric top and bottom portions and are of radially-continued wave form and adhered to one another at the peripheral edges thereof, a differential transformer having a plunger shaft connected to one end of the bellows, and a case fixedly supporting an air intake tube protruded from the other end of the bellows and containing therein the bellows and the transformer. The amplitude of the waveform of each of the diaphragm plates is sequentially enlarged toward the peripheral edge thereof Two or more such bellows are employed to reduce the size of the transducer, and to enhance the accuracy of the transducer, particularly used as a blood pressure measuring instrument.

Fig. I

- 1 -

SPECIFICATION

TITLE OF THE INVENTION

Pressure-to-Signal Converter

TECHNICAL FIELD

This invention relates to pressure-to-signal converters for converting air pressure to electric signal and, more particularly, to a pressure-to-signal converter of a type wherein one end side of a bellows is made to be an air intake port and fixed, and the other end side thereof is closed and coupled to a plunger of a differential transformer so as to move the plunger in response to the air pressure and to convert any displacement of the plunger to an electric signal.

BACKGROUND ART

While general structure of the pressure-to-signal converters of the kind referred to has been that one end side of a bellows is made to be a fixed end to provide an air intake port and the other end is made to be a free end which is coupled to a plunger of a differential transformer, it has been unable to satisfy such requirements, in the case of using it for special uses as, for example, a blood pressure detecting element of sphygmomanometers, as, for example, a requirement to make it compact so as to be portable, a requirement for the toughness against such well anticipatable possible overload as being trodden with a foot by mistake in a state of being folded while air remains in a cuff connected to the pressure-to-signal converter, and further a requirement for a linear variation of output deviation with respect to variations in the air pressure specifically when being used as the pressure-to-signal converter for the sphygmomanometer, and the converter of such general structure has not been able to be adopted as the element requiring the compactness, toughness and linearity in the output characteristics, such as the pressure-to-signal converter for the sphygmomanometer.

A main reason for these is caused by the structure of the bellows, that is, the bellows used for the conventional pressure-to-signal converter is generally formed by joining two diaphragm plates respectively having a wavy shape continuous in the radial directions and including concentric circular top and bottom portions and securing them at their peripheral edges to form a hollow space within them. In such bellows, the amplitude of the wavy shape is uniform over the entire range and, therefore, stresses will concentrate substantially to the top portions of the wave adjacent the securing part at the outer peripheral edge so that, in the case of using the bellows within its permissible stress, there have been problems that the pressing force and output deviation are small and the output deviation does not linearly vary.

Further, another reason for the above is caused by that only one bellows is used. That is, in order to assure a sufficient pressing force and output deviation in the use of the single bellows, it is necessary to make the diameter of the bellows to be sufficient so that, in the event when the bellows is arranged coaxially with the differential transformer which is long in the axial direction but is small in the diameter, the bellows will be bulky in the diametral direction, whereby the pressure-to-signal converter has not been able to be made compact to be portable.

DISCLOSURE OF THE INVENTION

A primary object of the present invention is, therefore, to provide a compact and tough pressure-to signal converter which is specifically optimum for use as the one for the sphygmomanometers.

Another object of the present invention is to provide a pressure-to-signal converter which assures the linear output deviation with respect to the variation in the air pressure and is optimum as the pressure-to-signal converter for sphygmomanometers.

According to the present invention, the above described objects are achieved by employing a plurality of bellows and coupling them mutually in sequence in their axial direction. More preferably, the above described objects are achieved by combining two diaphragm plates respectively having a wavy shape continuous in the radial directions and including concentric circular top and bottom portions and secured together at their peripheral edges and rendering the amplitude of the wavy shape to be gradually larger toward the peripheral edge.

The pressure-to-signal converter of the present invention shall be further explained in the followings with reference to accompanying drawings.

The drawings show an embodiment of the pressure-to-signal converter of the present invention, wherein FIGURE 1 is a sectioned side view thereof, FIG. 2 is its elevation, FIG. 3 is a sectioned view of its essential part, FIG. 4 is a circuit diagram for explaining the scheme of a differential transformer, FIG. 5 is a sectioned side view of a bellows, FIG. 6 is an upper plan view of the same, FIG. 7 is a stress distribution diagram, FIG. 8 is a diagram showing relations between the pressing force and the deviation, and FIG. 9 is an explanatory view showing relations between the pressing force and the thickness of the diaphragm plate of the bellows.

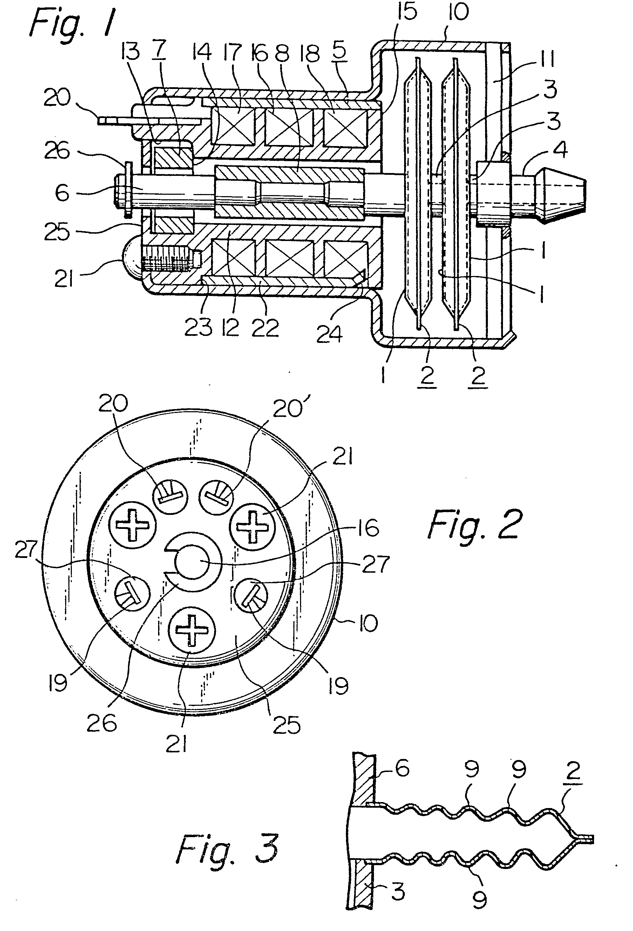

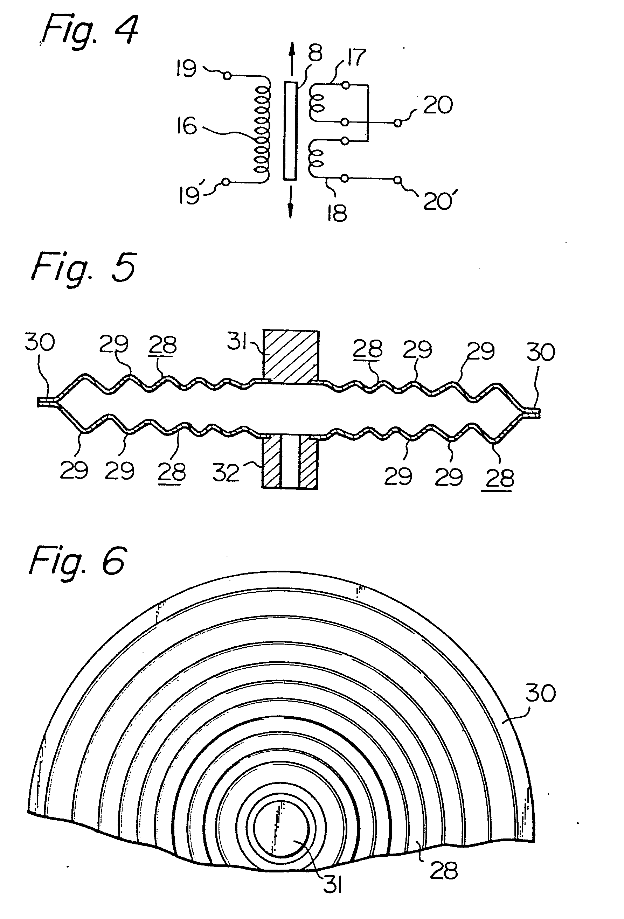

With reference to FIG. 1, the pressure-to-signal converter of the present invention comprises bellows 1 respectively comprising two diaphragm plates 2, a differential transformer 5 including a plunger shaft 6 connected to the free end of the bellows 1, and a cylindrical case 10 housing therein the bellows 1 and differential transformer 5 while supporting and fixing at one end an air intake pipe 4 of the bellows and leading thereout at the other end output terminals of the differential transformer 5. In the diaphragm plate 1, as shown in FIG. 3, a plurality of wavy ribs 9 are formed in concentric circles or, in other words, the plate is formed in a wavy shape continuous in the radial directions and including concentric circular top and bottom portions, the amplitude of which waves 9 is made larger substantially in proportion to the radius, closer to the peripheral edge. Thus, the linear relation between the pressure and the deviation can be obtained. A plurality (two in the drawing) of the bellows 2 each formed of two of such diaphragm plates 1 joined as secured at their peripheral edges to define therein a hollow space are connected, and thereby a large deviation can be obtained. The bellows 2 are connected between them in the center portion by means of a communicating pipe 3 which is connected on one end side to the air intake pipe 4. This air intake pipe 4 is fixed to a cover plate 11 of the case 10. The other end side of the plurality of bellows 2 is closed and provided in the center portion with a plunger shaft 6 projected therefrom, and the tip end portion of the plunger shaft 6 is borne with a guide bush 7. This guide bush 7 is engaged in a recessed step portion 13 provided in an endwise inner peripheral surface of a molding-made coil bobbin 12 of the differential transformer 5, and the inner diameter of the guide bush 7 is made smaller than the outer diameter of a plunger 8, while an end surface 14 of the guide bush 7 is made a stopper for the plunger 8. That is, the distance between the end surface 14 of the guide bush 7 and the left end surface 15 of the plunger 8 in FIG. 1 is made shorter than the distance from the right end of the coil bobbin 12 to the bellows 2 so that, even if an abnormal pressure is applied to the bellows 2, the plunger 8 will be locked on the end surface of the guide bush and the bellows 2 will not be broken colliding with an end surface 15 of the coil bobbin. On the coil bobbin 12, there are wound as separated from one another by partition walls a primary winding 16 in the middle and secondary windings 17 and 18 at both ends. As shown in FIG. 4, the secondary windings 17 and 18 are connected in reverse direction to each other and, in response to positions of the plunger 8, the voltage induced in one of the secondary windings will become higher than in the other, so that a voltage of difference corresponding to a displacement from the neutral position of the plunger 8 will appear at their both ends. The tip end surface of the coil bobbin 12 is provided with plug terminals 19, 19' and 20, 20' for the input and output to project therefrom and is secured to an end surface of the cylindrical case 10 by means of screws 21. 22 is a coil shielding cylinder made of a magnetic member, which is engaged to a projected step portion 23 provided on the outer peripheral surface of the coil bobbin 12 and is fixed to the outer periphery of the coil bobbin 12 to cover it by means of a plurality of cut-raised pawls 24. Further, the tip end of the plunger shaft 6 is projected out of an end surface 25 of the case, at which an E-shaped ring 26 fitted in an annular groove is locked against the end surface 25 of the case to form an inward movement stopper. Further, the inner diameter of the guide bush 7 bearing the tip end portion of the plunger shaft 6 is made smaller than the outer diameter of the plunger 8 fitted to the plunger shaft 6 so as to restrict any excessive movement of the plunger 8 by means of the end surface of the guide bush 7.

Referring next in detail to the structure of the bellows used in the pressure-to-signal converter of the present invention in the followings with reference to FIGS. 5 to 9, FIG. 5 shows an embodiment of the bellows 2, wherein an output deviation take-out part 31 and pressure input part are mounted to the center portions of metal diaphragms 28 which are forming upper and lower diaphragm plates and, as has been described above, the amplitudes of concentric circular waves 29 formed in each metal diaphragm 28 are made larger as their radii become larger.

In the bellows according to the present invention, as referred to in the above, the closer to the outer peripheral edge, the larger the amplitudes of the waves, and the farther from the edge, the smaller the amplitudes of the waves so that, so long as the pressing force and displacement are maintained the same for the same diameter, the maximum stress can be made smaller, whereby an effect can be brought about in such that, when the bellows is used within the permissible stress dependent on the material of the bellows, the diameter of the bellows can be made smaller or alternatively the pressing force and output deviation in the center portion of the bellows can be made larger and the linearity of the output deviation with respect to the pressing force can be improved.

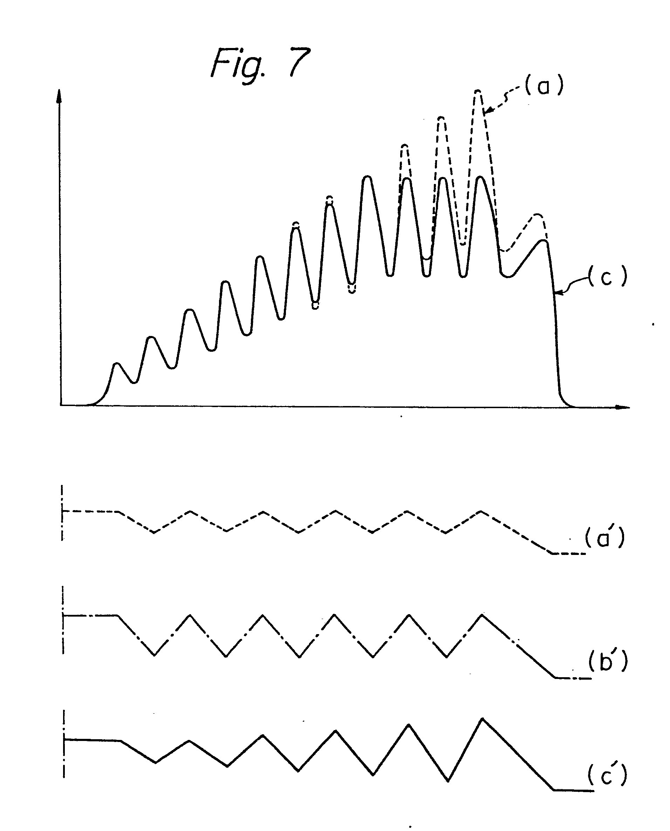

This shall be explained with reference to the drawings. In FIG. 7 of a diagram showing a stress distribution in the bellows, the closer to the outer peripheral edge, the larger the bending moment but, as the diaphragm plate is made in the wavy shape, the diaphragm will operate with the ridge or valley as a virtual fulcrum (stationary point) and the stress will become larger at its top portion than that at other portions. Thus, by varying the amplitude of the respective waves in response to the magnitude of such stress, the stresses can be dispersed more efficiently than in such diaphragm plate in which the amplitudes of the waves are uniform as the conventional products.

Now, the displacement $w$ of each minute portion of a thin flat plate is given by the following formula (1):

$$w = K \cdot \frac{P}{D} \cdot (a^2 - x^2)^2 \ \ldots \ldots \ (1)$$

$$w_0 = K \cdot \frac{P}{D} \cdot a^4$$

$$D = \frac{m^2 E \ t^3}{12 (m^2 - 1)}$$

wherein

D = Flexural rigidity,

K = Proportion constant,

P = Pressing force,

a = Radius of the diaphragm plate,

x = Distance from the center,

$\omega_O$ = Flexion (displacement) of the center portion,

m = Poisson's ratio,

E = Young's modulus and

t = Plate thickness.

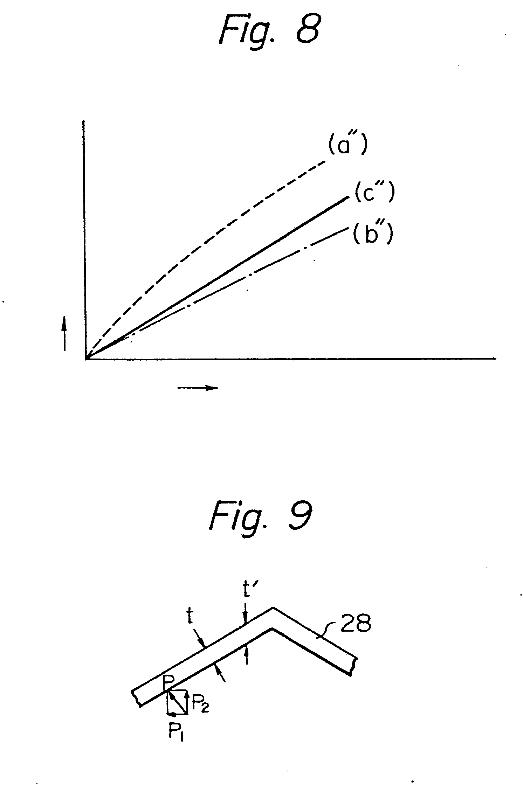

Here, the flexural rigidity D is a constant determined by the thickness and material of the plate but, in the case where investigations are to be made on the diaphragm plate, the thickness t will have to be considered, as shown in FIG. 9, a thickness $t_1$ of the plate taken in the pressing direction $P_2$ and, therefore, the rigidity D will be approximated as being D' as in the following formula (2), in the case of the diaphragm plate:

$$D' = \frac{m\,E(t')^3}{12(m^2-1)} \quad \ldots\ldots \quad (2)$$

In FIG. 9, if the pressing force is P, components $P_1$ for different slopes will cancel each other and the force actually causing the displacement will be $P_2$.

Therefore, there is a defect that, the larger the amplitude of the wave, the larger the thickness t', thus D' is made larger so as to render the displacement $\omega_2$ smaller. According to the present invention, however, an improvement is achieved by reducing the amplitudes of the waves at positions closer to the center portion where the stress is smaller. Further, so long as D' is constant with respect to varying pressing forces, $\omega_O$ for the respective pressures should vary linearly. In practice, however, the respective minute portions of the diaphragm will displace in the direction of $P_2$, so that t' will be caused to vary, whereby D' will be also caused to vary and $\omega_O$ will no longer vary linearly. The rate of the variation of this D' becomes more remarkable at positions closer to the outer peripheral edge of the bellows where the distortion (stress) is larger and this can be easily presumed from the fact that, the larger the distortion, the larger the variation in t'. The present invention has successfully made the variation of D' smaller to improve the linearity of $\omega$, by rendering the amplitude of the wavy shape to be higher at positions closer to the outer periphery so as to disperse the distortions (stresses), in view of the above fact.

Calculating actually the above by the finite element method in the case where the diaphragm plates of a diameter of 30 mm. and made of phosphor bronze are used and $\omega_0$ is made substantially the same as the maximum stress (stress = 20 kg./mm$^2$ and $\omega_0$ = 13), the linearity will be about 0.3 % in a conventional product and about 0.03 % in the product of the present invention. The pressing force P then was 0 to 0.4 kg./cm$^2$.

In FIG. 8 showing the relations between the pressing force and the output deviation, curves (a") and (b") show respectively the characteristics of the ones having large and small amplitudes as shown in FIG. 3 in conventional products of uniform amplitudes and a curve (c") shows characteristics of the product of the present invention in which the amplitudes are made substantially proportional to the radii.

According to the present invention, as has been described above, the amplitudes of the wavy shape of the diaphragm plates of bellows are gradually enlarged in the radial direction, so that there are advantages that the input and output characteristics can be made linear, and the pressing force and deviation can be taken to be larger if the dimensions are the same as in the conventional product, or the bellows can be made compact if the pressing force and deviation are maintained the same.

Further, according to the present invention, a pressure-to-signal converter of a higher sensitivity with bellows of a smaller diameter has been obtained by coupling a plurality of bellows, whereby an advantage is achieved in that the bellows and differential transformer can be compactly assembled within a small housing case.

Further, according to the present invention, the assembling steps are also very simple, in which the coil bobbin 12 on which the coils are wound first and the shielding cylinder 22 is then fitted is inserted into the cylindrical case 10 and secured by screws to the end surface 25 of the cylindrical case, the plug terminals 19, 19', 20 and 20' mounted to the end surface of the coil bobbin 12 are inserted into respective sockets provided on an assembling base, and the movable parts are assembled while confirming the neutral position of the plunger 8 with a meter. As the plug terminals are thus projected out of the end surface 25 of the case, there are attained such advantages that terminal connecting part can be made compact and the assembling steps can be simplified.

Further according to the present invention, the excessive pressing force can be endured as has been described above (the maximum permissible pressure which was 300 mm.Hg conventionally can be elevated nearly to 500 mm.Hg). Further, as the stopper is formed by means of the end surface 14 of the guide bush 7 and plunger 8, the bellows 2 can be prevented from being broken, even in the case, for example, when an abnormal pressure is applied to the cuff.

BRIEF DESCRIPTION OF THE DRAWINGS

The drawings show an embodiment of the pressure-to signal converter of the present invention, wherein FIGURE 1 is a sectioned side view thereof, FIG. 2 is an elevation thereof, FIG. 3 is a sectioned view of its essential part, FIG. 4 is a circuit diagram for explaining the scheme of a differential transformer, FIG. 5 is a sectioned side view of a bellows, FIG. 6 is an upper plan view of the same, FIG. 7 is a stress distribution diagram, FIG. 8 is a diagram showing relations between the pressing force and the deviation, and FIG. 9 is an explanatory view showing relations between the pressing force and the thickness of the diaphragm plate of the bellows.

CLAIMS

1. A pressure-to-signal converter wherein a plurality of bellows respectively made by joining two diaphragm plates respectively having a wavy shape continuous in the radial directions and including concentric circular top and bottom portions and securing them with each other at their peripheral edges are coupled in the axial directions through a communicating pipe, an end thereof in one of the directions is made to be a fixed end and to be an air intake end and the other directional end is closed to be a free end and coupled to a plunger of a differential transformer.

2. A pressure-to-signal converter according to claim 1 wherein amplitudes of said wavy shape of the diaphragm plate of the bellows are made gradually larger toward the peripheral edge of the diaphragm plate.

3. A pressure-to-signal converter according to claim 1 wherein said bellows and differential transformer are housed in a cylindrical case, and an end of said case on the side of said free end of the bellows is closed while projecting thereout in the form of plugs input and output terminals of the differential transformer.

4. A pressure-to-signal converter according to claim 1 wherein a guide bush is further provided to bear a shaft of said plunger of the differential transformer, and the inner diameter of said guide bush is made smaller than the outer diameter of the plunger mounted to said plunger shaft.

*Fig. 1*

*Fig. 2*

*Fig. 3*

**Fig. 4**

**Fig. 5**

**Fig. 6**

Fig. 7

## Fig. 8

## Fig. 9

INTERNATIONAL SEARCH REPORT

International Application No PCT/JP79/00144

00184I8

## I. CLASSIFICATION OF SUBJECT MATTER (if several classification symbols apply, indicate all)

According to International Patent Classification (IPC) or to both National Classification and IPC

G01L 7/10, G01L 9/10
G12B 1/04, G01D 5/22

## II. FIELDS SEARCHED

### Minimum Documentation Searched

| Classification System | Classification Symbols |
|---|---|
| I.P.C | G01L 7/10, G01L 9/10, G12B 1/04, G01D 5/22 |

Documentation Searched other than Minimum Documentation
to the Extent that such Documents are Included in the Fields Searched

Jitsuyo Shinan Koho        1926 ∿ 1979
Kokai Jitsuyo Shinan Koho   1971 ∿ 1979

## III. DOCUMENTS CONSIDERED TO BE RELEVANT

| Category | Citation of Document, with indication, where appropriate, of the relevant passages | Relevant to Claim No. |
|---|---|---|
| A | JP, Y1, 10-17023, 1935-11-9 Amano Shuichi | 1-4 |
| A | JP, Y1, 47-19039, 1972-6-29 Mitsubishi Electric Corporation | 1-4 |
| A | JP, B1, 34-4403, 1959-5-30 NOBI BOSAI KOGYO KABUSHIKI KAISHA | 2 |
| A | JP, B1, 36-1246, 1961-3-10 Iwasaki Hideto | 3 |
| A | JP, B1, 36-12394, 1961-8-2 General Electric Company | 4 |

\* Special categories of cited documents:

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search | Date of Mailing of this International Search Report |
|---|---|
| August 28, 1979 (28.08.79) | September 3, 1979 (03.09.79) |

| International Searching Authority | Signature of Authorized Officer |
|---|---|
| Japanese Patent Office | |

Form PCT/ISA/210 (second sheet) (October 1977)